# EUROPEAN PATENT APPLICATION

(11) **EP 1 515 255 A2**
(43) Date of publication of application: **16.03.2005**
(21) Application number: 04077556.1
(22) Date of filing: 15.09.2004
(51) Int. Cl.: G06F 17/60

(54) **Participant segmentation for managing communications**

(30) Priority: 15.09.2003 US 663370
(71) Applicant: SAP AG, 69190 Walldorf (DE)
(72) Inventor: Beringer, Joerg, 60431 Frankfurt (DE)
(74) Representative: Winckels, Johannes Hubertus F.

(57) **Abstract**

Systems and techniques to segment participants in an enterprise. In general, in one implementation, a method includes profiling participants in an enterprise according to characteristics of the participants, receiving identification of a domain that is associated with a first taxonomy, receiving identification of a specification identifying one or more of the characteristics associated with the first taxonomy, and segmenting the profiled participants into a subgroup by matching the characteristics of the participants with the domain and the specification. The characteristics can be associated with taxonomies according to the subject of the taxonomies.

## Description

### BACKGROUND

The following description relates to communications, for example, the identification of segments to manage communications with a group of participants.

As the number of participants in an enterprise increases, effective communication between the participants is often hindered. In particular, if every message is distributed to every participant, the average value of each message to each individual participant decreases. As the number of messages increases, individual participants eventually begin to disregard messages-even those that are germane to their participation in the enterprise.

Many enterprises attempt to address this issue by segmenting the participants in an enterprise into subgroups, otherwise known as segments, of the total group of participants. The segmentation of participants thus involves the division of the participants in an enterprise into a subgroup.

### SUMMARY

The present application describes systems and techniques relating to the segmentation of participants in an enterprise. The present inventors recognized that conventional segmentation systems and techniques are cumbersome to use, inaccurate in that they may exclude participants from germane communications or include participants in irrelevant communications, and often incompatible with dynamic enterprises where the nature of an participant's participation may change.

Accordingly, the inventors have developed systems and techniques for managing communications in an enterprise. In one aspect, a method includes profiling participants in an enterprise according to characteristics of the participants, receiving identification of a domain that is associated with a first taxonomy, receiving identification of a specification identifying one or more of the characteristics associated with the first taxonomy, and segmenting the profiled participants into a subgroup by matching the characteristics of the participants with the domain and the specification. The characteristics can be associated with taxonomies according to the subject of the taxonomies.

This and other aspects can include one or more of the following features. An identification of a border drawn from a second taxonomy can be received. The subgroup can be segmented by matching the characteristics of the participants with the intersection of the border with the domain and the specification. A user can be queries for the identification of the domain and the identification of the specification. Information identifying the domain can be added to a message and the message can be sent to the subgroup. The participants can be profiled according to a finite vocabulary describing the characteristics. An identification of a corporate domain common to corporate enterprises can be received.

In another aspect, a method includes receiving a characteristic identifying a first subgroup of selected participants in an enterprise, receiving a specification of the characteristic, the specification delineating a second subgroup of participants within the first subgroup, and managing communications with the second subgroup based upon the characteristic and the specification of the characteristic. The received characteristic can be hard-coded into a set of machine-readable instructions for segmenting communication recipients.

This and other aspects can include one or more of the following features. The operation can include receiving a specification of the characteristic. The specification can be assigned to the characteristic to customize the set of machine-readable instructions to the enterprise. The specification can be particular to the characteristic. The received characteristic can be a domain identifying the first subgroup based on the nature and type of the first subgroup's participation in the enterprise and can be receives in a selection from amongst a collection of potential characteristics. The operations can include presenting an inventory of specifications of the characteristic to a participant.

The operations can also include associating a plurality of participant characteristics with each of a plurality of participants in the enterprise. Subgroups of the participants can share common characteristics. Also, a plurality of attribute values can be associated with each of the plurality of participants. Managing communications can include establishing a contact list of the participants in the second subgroup. The contact list can be established dynamically for a particular message.

The operations can include receiving a border identifying a third subgroup of the second subgroup of selected participants. The border can be drawn from a second characteristic hard-coded into a set of machine-readable instructions. Communications can be identified by one or more of the characteristic and the specification of the characteristic rather than the border. The operations can also include receiving a role of a participant within the second subgroup, and excluding the participant from communications within the second subgroup based on the role.

In another aspect, a method includes receiving a message from a user, receiving two or more characteristics identifying a subgroup of selected participants in an enterprise for receipt of the message, and dynamically identifying the subgroup of participants for receipt of the received message.

This and other aspects can include one or more of the following features. The message can be received from the user by way of a source data processing system where the message originated. The subgroup of participants can be dynamically identified upon receipt of the message or periodically. The identification of the subgroup of participants can be discarded after communication of the message.

Receiving two or more characteristics can include receiving a first characteristic identifying selected participants in the enterprise based on a location of participation in the enterprise and receiving a second characteristic identifying selected participants in the enterprise based on a nature of participation in the enterprise. A role of a participant within the subgroup can also be a received characteristic. The participant can be excluded from the identified subgroup based on the role.

In another aspect, a machine-implemented method includes receiving a description of a first participant's participation in an enterprise, storing the description of the first participant's participation in a participant data object, identifying that the first participant is a member of a group of recipients for a class of messages based upon the characteristic and the location of the first participant's participation, associating the first participant with the group of recipients, receiving a message including information applicable to identifying the group of recipients, and excluding the first participant from a communication of the received message to other members of the group of recipients based on the role of the first participant within the group of recipients. The description can include a characteristic and a location of the first participant's participation. The first participant can be associated with the group of recipients by identifying a role of the first participant within the group of recipients.

In another aspect, an article includes a machine-readable medium storing instructions operable to cause one or more machines to perform operations. The operations can include receiving information regarding a segment of participants and registering a new member with the segment of participants as having a certain role in the segment, the new member sharing the common characteristic of the participants.

This and other aspects can include one or more of the following features. The registration of the new member can include indicating that the new member is to be excluded from certain communications to the segment of participants. The received information regarding the segment of participants can include a generic domain common to many enterprises and a topic specification of the generic domain. The generic domain can identify a group larger than the segment of participants. The topic specification can delineate a second subgroup within the group identified by the generic domain. For example, the topic specification can delineate the segment of participants.

In another aspect, a device includes a participant description database identifying participants and describing the participants' participation in an enterprise and a data processing system configured to perform processing activities. The activities can include receiving a characteristic identifying a first subgroup of selected participants in an enterprise, providing machine-readable instructions for presenting a collection of potential specifications of the characteristic to a user to further delineate the first subgroup into a second subgroup, receiving a specification of the characteristic from the user, and comparing the characteristic and the specification of the characteristic with the participants' participation in the enterprise as found in the participant description database to identify the first subgroup and delineate the first subgroup into the second subgroup. The received characteristic can be hard-coded into a set of machine-readable instructions for segmenting communication recipients.

This and other aspects can include one or more of the following features. The participant description database can include a participant object identifying a particular participant and describing the particular participant's participation in an enterprise. The participant object can include information describing a qualification of the particular participant. The data processing system can be also configured to receive a specification that is particular to the characteristic.

These and other aspects may realize one or more of the following advantages. A controlled vocabulary can be installed for the most dominant corporate wide taxonomies. Each participant can be profiled according to such taxonomies. A specialized query notation can support the identification of a primary domain that correspond to one of the taxonomies. Optional intersections can use additional taxonomies to define segment borders. With this technique, the information about the characteristic of the primary target group is not lost.

A segmentation algorithm can match queries against user profiles to determine the proper segment of participants. The segment can be stored as a fixed list of participants. Alternatively, a dynamic query that updates the segment periodically or on demand can be stored.

Participants in an enterprise can be accurately and quickly segmented. The segmentation can be performed using enterprise-wide vocabularies that are germane to an enterprise's activities. Such vocabularies, also referred to as taxonomies, can be installed by developers of a communication system and amended or supplemented to fit the specific nature of the enterprise. The participants in an enterprise can be profiled according to such vocabularies.

Systems and techniques can use terms that support the segmentation of participants. The terms can include the identification of a primary domain that corresponds to a taxonomy. The terms can also include additional intersections defined, e.g., by additional taxonomies, to narrow segments. With such narrowed segments, the identification of a primary domain can be retained and can be applied to other purposes, as appropriate.

A segment of participants can be stored for subsequent retrieval. Alternatively, a segment of participants can be dynamic in that it is updated periodically or on demand.

Details of one or more implementations are set forth in the accompanying drawings and the description below. Other features and advantages may be apparent from the description and drawings, and from the claims.

### BRIEF DESCRIPTION OF THE DRAWINGS

These and other aspects will now be described in detail with reference to the following drawings.
FIG. 1 is a schematic illustration of how participants in an enterprise can be segmented.
FIG. 2 shows example descriptive information describing a participant in an enterprise.
FIG. 3 shows an example machine-readable description of a participant in an enterprise.
FIG. 4 is a flowchart showing a process for segmenting participants.
FIG. 5 is a term for multidimensional systems and techniques for segmenting participants.
FIG. 6 shows a shows a portion of a display panel where input regarding a message can be received from a participant in an enterprise.
FIG. 7 is a flowchart showing a process for segmenting participants by extracting information from a message.
FIG. 8 is another term for systems and techniques for segmenting participants.
FIG. 9 shows another portion of a display panel where input regarding a message can be received from a participant in an enterprise.
FIG. 10 is a flowchart showing a process for segmenting participants.
FIG. 11 is a flowchart showing a process for managing the communication of a particular message.
FIG. 12 is another term for systems and techniques for segmenting participants.
FIG. 13 is a flowchart showing a process for managing communications by registering a participant with an existing communication segment.
FIG. 14 is a flowchart showing a process for managing communications by establishing a communication segment.
FIG. 15 shows an example data processing environment where participant segmentation can occur.

Like reference symbols in the various drawings indicate like elements.

### DETAILED DESCRIPTION

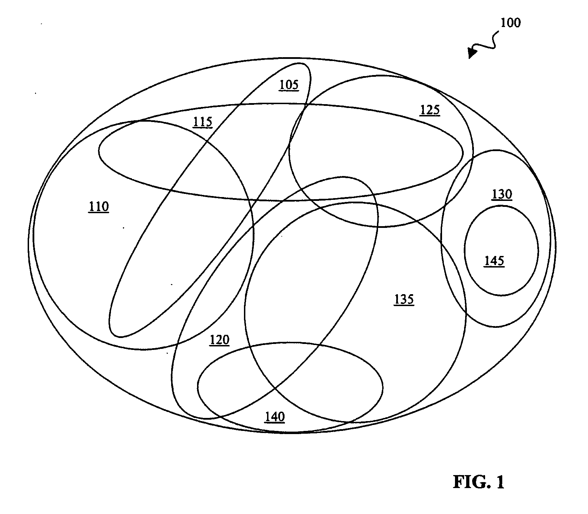

The described systems and techniques relate to the segmentation of participants in an enterprise. An enterprise is an activity involving two or more individuals. Example enterprises include companies, associations, institutions, organizations, governmental bodies, industries, project teams, and interest groups. FIG. 1 schematically illustrates a group of participants 100 in an enterprise that is segmented into a collection of subgroups 105, 110, 115, 120, 125, 130, 135, 140,145. Each of subgroups 105, 110,115,120,125,130, 135, 140,145 includes participants from group 100 that share one or more common characteristic that can be used to manage communications so that the efficacy of communications within group 100 is improved. For example, the efficacy of communications can be improved by increasing the likelihood that messages are relevant to the message recipients and by increasing the likelihood that no participant is incorrectly excluded from receiving a message that is relevant to the participant's participation in the enterprise. This can be done by determining whether or not to relay a message to a participant based on the participants position within or without subgroups 105, 110, 115, 120, 125, 130, 135, 140, 145.

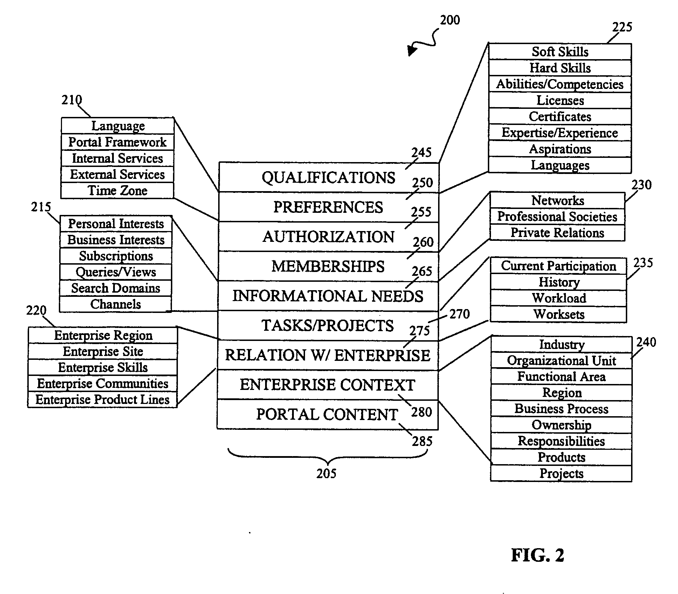

FIG. 2 shows example descriptive information 200 that describes a participant in an enterprise. Descriptive information 200 can be used to determine if the participant shares a characteristic and belongs in a subgroup of the participants in an enterprise. Descriptive information 200 includes various categories of common characteristics. FIG. 2 illustrates example categories of common characteristics 205, and example characteristics 210, 215, 220, 225, 230, 235, 240 within some of the example categories. Example categories of common characteristics 205 include the qualifications and skills of a participant 245, the personal preferences of the participant 250, the authorization level of the participant 255, the membership of the participant in formal and informal groups 260, the informational needs of the participant 265, the tasks and projects involving the participant 270, the relationship between the participant and the enterprise 275, the context of the participant's participation in the enterprise 280, and the portal content that the participant accesses 285. Categories 245, 250, 255, 260, 265, 270, 275, 280 are neither exhaustive nor mutually exclusive. In other words, other categories of information descriptive of a participant in an enterprise exist and certain descriptive information may fall within more than one category.

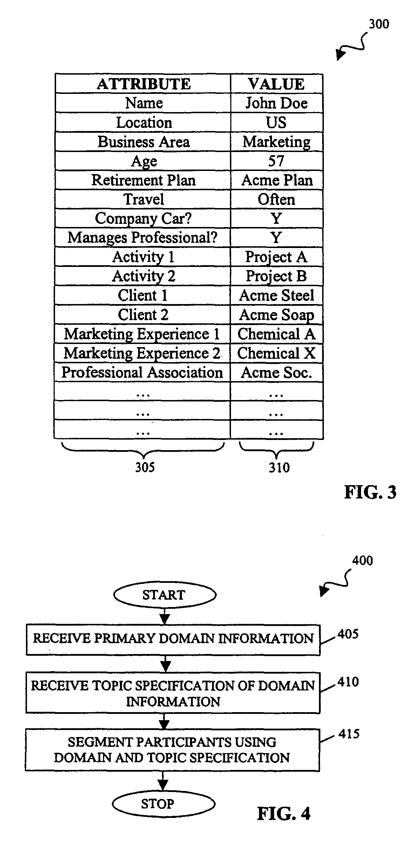

FIG. 3 shows an example description table 300 that describes a participant in an enterprise. Description table 300 includes a series of attributes 305 and values 310 that together describe a participant. Attributes 305 are characteristics of participants while values 310 are denominations of the characteristics of the particular, described participant. Characteristics can belong to corporate wide generic domains. The values can be limited to controlled vocabularies to ensure consistent profiling across participants.

Description table 300 can be all or part of a single data object such as an employee record in a human capital management (HCM) system, or the participant description information in description table 300 can be distributed across several data objects and/or several data processing systems. Attributes 305 and values 310 can be stored as a series of attribute-value pairs, as a series of tags and elements, or the association between attributes 305 and values 310 can be determinable from other features of their storage or other, associated information. The semantics of attributes 305 and values 310, and of the association between attributes 305 and values 310, is appropriate to make the participant description readable to a data processing device.

In one implementation, values 310 can be constrained to a finite collection of potential denominations of characteristics. For example, values 310 can be limited to controlled vocabularies that encompass every allowable state of a participant in an enterprise. For example, the denomination of a "location" attribute may be limited to "Europe," "Asia," "US," "Latin America," and "Northern America-not US," making denominations such as "Canada" and "Australia" invalid. Such limitation of values 310 to a finite collection of denominations can be used to ensure consistent profiling across participants.

The description information in description table 300 can be assembled using the described participant's own input, using input from other participants, using default assignations, and/or independently of user input. For example, the participant's participation in the enterprise can be tracked to assemble description information or to modify default assignations or user input description information.

FIG. 4 is a flowchart showing a process 400 for segmenting participants. Process 400 can rely on the identification of a single primary characteristic of participants to segment participants. Process 400 can be performed at any of a number of data processing devices in a data communication network. For example, process 400 can be performed at a source data processing system where messages originate. Alternatively, process 400 can be performed at a router or other intermediate data processing system that relays messages from a source data processing system to recipients. Also, process 400 can be performed at a target data processing system where messages are received by participants in an enterprise.

A system performing process 400 can receive information regarding a domain at 405. Domains are categories of characteristics that can be used to define broad subgroups within the group of participants in the enterprise. Domains may be generic in that they are likely to be relevant to the activities of common enterprises and independent of the specific nature of the enterprise. For example, many corporate enterprises have product lines, business areas, and target markets. Domains can correspond to such common elements of enterprises.

Domains can be based on taxonomies that provide a controlled vocabulary. A taxonomy is a vocabulary (i.e., a set or words) that is germane to an enterprise's activities. A taxonomy can be controlled in that it is limited to include only a limited set of words. Domains modeled by taxonomies that provide a controlled vocabulary can ensure consistency across the enterprise. For example, any enterprise will have a product line, business areas, target markets, and other common features. The segmentation can assume the existence of such corporate wide domains but does not depend on any concrete realization of a taxonomy.

Common domains can be hardcoded into machine-readable instructions for managing communications. For example, a software developer can preimplement a list of common domains for software that is to be shipped to a client. The content of such preimplemented domains need not be included with the shipment. Upon receipt of such software, a client can populate client records with content that is pertinent to the preimplemented domains.

The system performing process 400 can also receive a topic specification of the received domain information at 410. A topic specification is one or more characteristics that can be used to refine a subgroup of participants defined by a domain. Domains are generally customized to an enterprise through the definition of a series of topic specifications that suit the client's particular purposes. For example, a client's product line may include various automobile models. Topic specifications for the product line domain can thus correspond to the various models, even when those models are unique to the client.

Since topic specifications are generally dependent on the specific nature of an enterprise, topic specifications can be entered into machine-readable instructions at the enterprise level. For example, a manager or other participant in an organization can enter a customized list of topic specifications for each domain, based on the specific nature of the enterprise. Topic specifications can be received directly from a user or by way of another data processing system, based upon user input or upon information extracted from one or more messages.

The system performing process 400 can then segment a collection of participants using the received domain information and topic specifications at 415. The segmentation can be used to manage communications. The segmentation can include, e.g., the establishment of contact lists for future communications, the definition of ad-hoc collections of recipients for particular messages, and the creation and modification of segments.

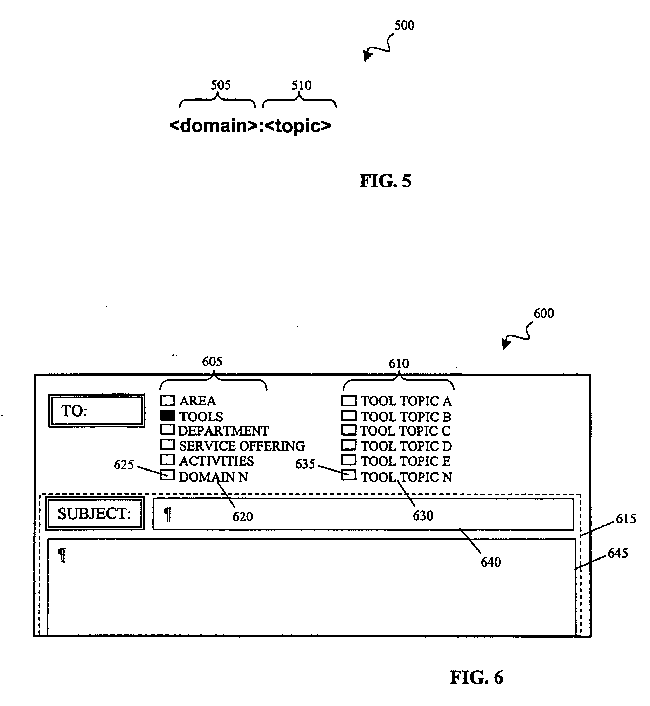

FIG. 5 shows a term 500 that symbolically expresses such a multidimensional approach to managing communications. Term 500 includes a domain 505 that is delineated by a topic 510. Domain 505 can be generic in that it is likely to be relevant to common enterprises, independent of the specific nature of the enterprise. Domain 505 can also be a primary domain. A primary domain is the only domain that is used to define a particular subgroup. A primary domain can also express the intent of the originator of a communication in that it expresses the originator's motivation behind the definition of the particular subgroup.

Topic 510 can be specific to an enterprise in that it reflects the specific nature of the enterprise.

Thus a set of generic or nearly generic domains can form a first dimension that is further delineated by a second dimension of topics. Such a multidimensional approach can be used to manage communications by providing a two level basis for determining whether or not to communicate one or more messages to a participant.

FIG. 6 shows a shows an example portion of a display panel 600 where input regarding the domain and topic of a message can be directly received from a participant in an enterprise who wishes to send a message. Display panel portion 600 can be a dedicated electronic message window for an email program, a mailing list, or other communication system.

Display panel 600 includes a domain selection section 605, a topic selection section 610, and a message input section 615. Domain selection section 605 can include an inventory of domains each identified by a domain name 620 and selectable by a domain selection box 625. Topic selection section 610 can include an inventory of topics associated with each domain selected in domain selection section 605. As illustrated, topic selection section 610 includes an inventory of tool topics associated with the selected domain "tool" in domain selection section 605. Topics in topic selection section 610 can be identified by a topic name 630 and selectable by a topic selection box 635. Message input section 615 can include a subject input 640 and a message body input 645.

In operation, a participant in an enterprise can interact with subject input 640 and message body input 645 to input the subject and body of a message, respectively. The user can also interact with domain selection section 605 to select a domain for the message, e.g., by clicking on a domain selection box 625 using a pointing device such as a mouse. Based on the domain selection, a data processing device can render an inventory of topics relevant to the selected domain in topic selection section 610. The user can then interact with the topic selection section 610 to select a topic for the message, e.g., by clicking on a topic selection box 635. Using the received topic and domain selection, a source, intermediate, or target data processing device can manage communications, e.g., by determining whether or not to relay one or more messages to a participant.

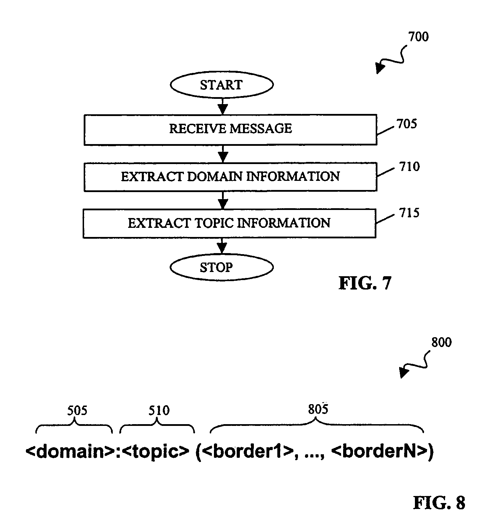

FIG. 7 is a flowchart of an alternative process 700 for receiving domain and topic information. Process 700 can be performed, e.g., at a source data processing system where messages originate, at a router or other intermediate data processing system that relays messages from the source data processing system to recipients, or at a target data processing system where messages are received by participants in an enterprise.

A data processing device performing process 700 can receive a message at 705. The received message can include a message subject and a message body. The message can also include supplemental information such as information regarding previous messages in a string or a description of the participant sending the message. The description of the sending participant can include information such as descriptive information 200 in FIG. 2. The message may even include information explicitly identifying a domain and topic for the message, derived based on user input. The supplemental information may be included in the message as metadata that is not normally visible to a message recipient.

The system can extract domain information from the message at 710. The extracted domain can be used to manage the communication of the message. The system can extract the domain information using one or more techniques such as keyword searches, natural language parsing, and rule-based expert systems for identifying the domain of a message. For example, the system can use natural language parsing to identify that a particular message relates to a service offering by the information technology training department of the enterprise. As another example, an expert system can use information regarding the content of the message, the history of a message string, the domain identified by the sender, and the participant sending the message to extract domain information.

Based on the extracted domain information, the system performing process 700 can also extract topic specification information regarding the message at 715. The topic specifications can be predefmed for each domain, or the topics can be generated and assigned to a message based upon the message. For example, if the message domain is a service offering by the information technology training department, the system can assign a topic based upon the repeated occurrence of a keyword such as the name of a software product. The extracted domain and topic information can then be used to manage communications, either by the extracting data processing system or by another system that receives the domain and topic information from the extracting system.

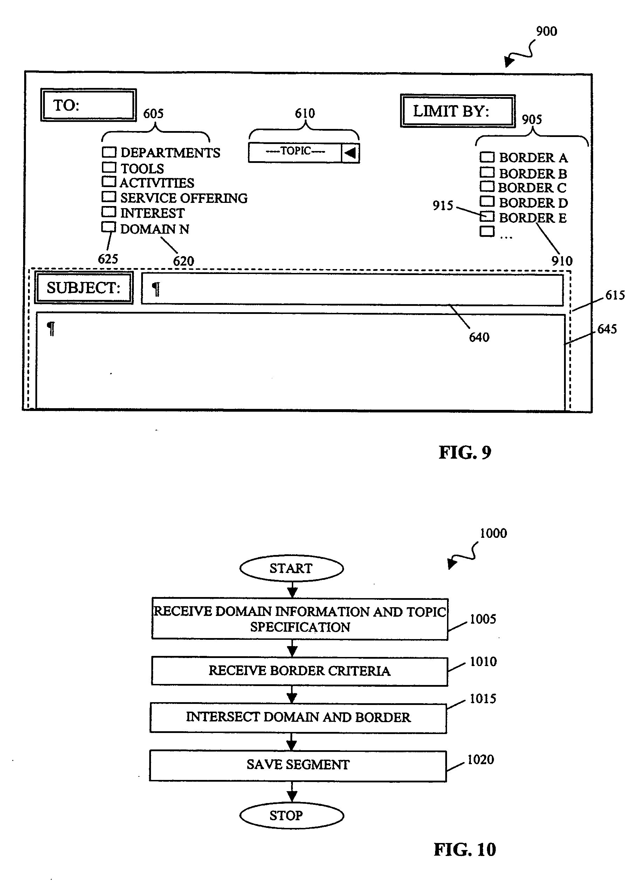

FIG. 8 shows a term 800 that symbolically expresses another approach to defining participant segments. Term 800 includes a primary domain 505 that is delineated by a topic 510 and which is intersected by one or more border criteria 805. Border criteria 805 are topics from other domains that can be used to defme subgroups within the group of participants defined by the primary domain and topic specification. Borders 805 thus differ from a second domain in that borders 805 are more concerned with limiting primary domain 505, rather than identifying additional targets.

In term 800, domain 505 is delineated by a topic 510 and one or more borders 805. Primary domain 505, together with topic 510, express the primary characteristics of the segment. Borders 805 can be used to narrow the segment but generally do not change the primary characteristics of the segment, such as the primary domain of the segment. The primary characteristic of a segment reflect the motivation of the sender of the communication. Since the communication has a primary characteristic, a participant who receives messages posted into the identified segment can still be provided with information identifying the originator's motivation behind the transmission of the message as embodied by domain 505 and topic 510. Thus, the a participant's membership in a group who receives messages posted into the identified segment can still recognize the primary reason of sending this message. [0067] For example, if a manager transmits a message to all the salespeople in an enterprise based on primary domain 505 and topic 510 relating to their job activity, a border 805 that is drawn from another (e.g., geographic) domain can refine the targeting of the message but still allow the manager's motivation (i.e., reaching the salespeople) to be discerned if information regarding domain 505 and topic 510 are included in the transmission. The system may use this knowledge to deliver such messages in different channels that are associated with the primary domain.

By using domains, topics, and borders in systems and techniques for managing communications, the efficacy of communications can be improved. In particular, borders can be relatively orthogonal to domains and topics in that membership in a group identified by a border need not be strongly correlated with membership in a group identified by a domain and a topic. As such, the combination of a domain, topic, and border can be used to manage communications of precisely targeted subgroups.

FIG. 9 shows a shows an example portion of a display panel 900 where input regarding one or more borders, as well as the domain and topic specifications of a message, can be received from a participant in an enterprise who wishes to send a message.

Display panel 900 includes domain selection section 605, topic selection section 610 (shown as a pull down menu), message input section 615, as well as a border selection section 905. Border selection section 905 includes an inventory of borders each identified by a border name 910 and selectable by a border selection box 915.

In operation, a participant in an enterprise can also interact with border selection section 905 to select one or more borders for the message, e.g., by clicking on a border selection box 915 using a pointing device such as a mouse. Based on the border selection, and in conjunction with a selection of a domain and a topic specification, a source, intermediate, or target data processing device can manage communications, e.g., by determining whether or not to communicate messages to a participant.

FIG. 10 shows a process 1000 for building segments by intersecting primary domains with border criteria. Process 1000 can be performed by a data processing system upon prompting by a participant in an enterprise (independent of any particular message) or at the time that such a participant wishes to communicate a particular message.

The system performing process 1000 can receive domain information, and a topic specification of the domain, at 1005. The system can also receive border information at 1010. The border information can be explicitly received from a participant, or implicitly received in a message and subsequently extracted.

Using the domain, topic, and border information, the system can build the segment by creating a list of segment participants at 1015. The list of segment participants can include participants in the enterprise who participate in activities related to the received domain, topic, and border.

The system performing process 1000 can also save the list of contacts at 1020. For example, the system can save the list of contacts by storing the list locally or remotely on a data storage device. The list of contacts can be accessed at a later time to spare any processing expense associated with creation of the list.

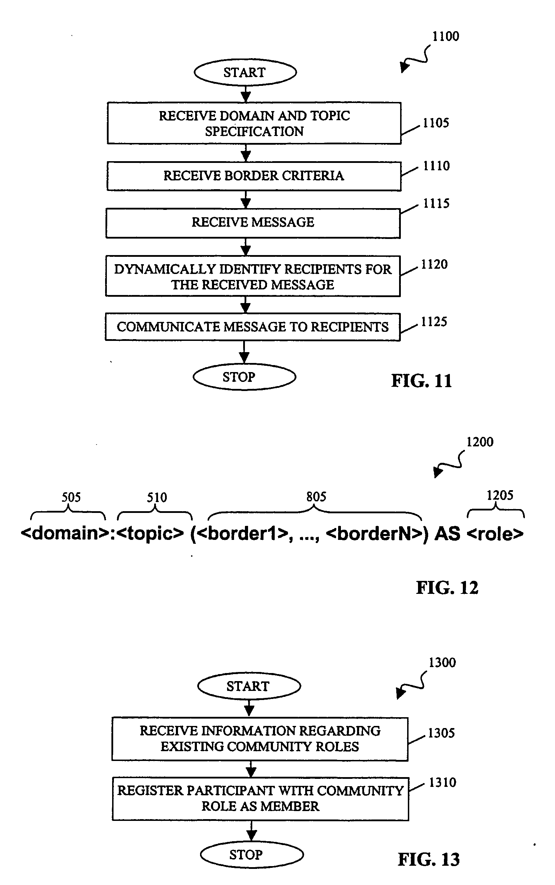

FIG. 11 shows a process 1100 for managing communications that can be performed by a data processing system on an ad-hoc basis when a participant in an enterprise wishes to communicate a particular message.

The system performing process 1100 receives domain, topic, and/or border information at 1105, 1110. The system also receives the particular message whose communication is to be managed at 1115. The received message can include a message body, a message subject, and supplemental information such as information regarding previous messages in a string or a description of the participant sending the message. The domain, topic, and border information can be received simultaneously with the message. For example, the domain, topic, and border information can be extracted from the message, or the domain, topic, and border information can be received as metadata associated with the message. The system performing process 1100 can dynamically identify a group of one or more recipients for the particular received message at 1120. The dynamic identification of recipients can include recreating, upon receipt of a trigger, a list of participants who are the receive the message. The recreation of the list of participants can be triggered, e.g., periodically after the passage of a predefmed period of time, upon receipt of a user request to recreate the list, or whenever such a list is required to perform communications operations. For example, the receipt of the message at 1115 can trigger the recreation of the list of participants.

The group of identified recipients need not be pertinent to any purpose other than the communication of the particular received message. The system can then communicate the message to the dynamically identified recipients at 1125. For example, if the system performing process 1100 is the source of the message, the system can send the message to the identified recipients. Alternatively, if the system performing process 1100 is an intermediate system, the system can selectively relay the message to appropriate target systems. As another example, if the system performing process 1100 is a target system, the system can filter incoming messages to determine if reception by local participants is appropriate.

FIG. 12 shows a term 1200 that symbolically expresses another approach to managing communications. Term 1200 includes domain 505 that is delineated by topic specification 510, one or more borders 805, and a role 1205. Role 1205 identifies the nature of a participant's participation in a resulting segment.

Roles 1205 are generally applicable to a particular segment. Example roles 1205 include a core segment participant role, a guest role, an active segment participant role, a passive segment participant role, a subject matter expert role, a matchmaker role, an advisor role, and a junior role. A participant who has one role in a particular segment may have another role in another segment. For example, a guest in one segment may be an advisor to another segment.

Roles can be generic to common segments or other communication infrastructure communities in different enterprises and commonly entered into machine-readable instructions for managing communications, or roles can be custom to an enterprise in that they reflect the specific nature of the enterprise. Custom roles can generally be entered into machine-readable instructions for managing communications at the enterprise level, for example by a participant wishing to manage communications within the enterprise.

In term 1200, domain 505 is delineated by topic specification 510, one or more borders 805, and role 1205. In other words, role 1205 can identify a yet smaller subgroup than the subgroup identified by domain 505, topic specification 510, and one or more borders 805.

By using role 1205 in systems and techniques for managing communications, the efficacy of communications can be improved. In particular, information that is relevant or appropriate only to select members of a segment can be communicated. This is applicable to a number of situations, such as when only certain members of a segment are authorized to receive information, or when the information is relevant only to participants in a segment with a certain relationship to the segment. For example, a segment participant who is engaged in producing a product may not be authorized to receive or interested in receiving communication regarding future development efforts or personnel issues within the product development department.

FIG. 13 shows a process 1300 for managing communications. Process 1300 can be performed at a source, intermediate, or target data processing system.

The system performing process 1300 can receive information regarding a existing community roles at 1305. The received information can include a domain, a topic specification of the domain, and one or more borders. The community roles can be a system or technique for organizing communications such as a contact list or a filter into a communication channel.

The system can then register a participant with the community role as a member at 1310. The registration can include adding the participant to a contact list or ensuring that a participant can receive certain message types communicated in a communication channel. The registration can include identifying the participant's role to the segment. The registration can be spurred by a prompt received from a user or without user input, based upon a correspondence between the segment and a description of the participant.

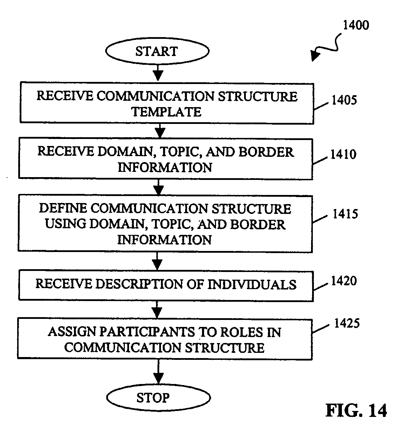

FIG. 14 shows a process 1400 for managing communications. Process 1400 can be performed at a data processing system when the need to establish a new segment is identified. For example, the need for a new segment can be identified by a participant request or automatically based on the amount and nature of participant communication within the enterprise.

The system performing process 1400 can receive a segment template at 1405. A segment template can identify the potential domains, topics, and borders within an enterprise.

A segment template can also identify potential roles that are available to participants, as well as the impact that a participant's role will have upon communication with the participant.

The system performing process 1400 can also receive domain, topic, and border information for the new segment at 1410. Using the received information, the system can define a segment such as a contact list at 1415.

The system can also receive description of participants who potentially may be included in the new segment at 1420. The participant description can include descriptive information 200, as illustrated in FIG. 2. The participant information can be received in a description table 300, as illustrated in FIG. 3.

Using the received participant information, the system performing process 1400 can assign select participants to appropriate roles within the new segment at 1425. For example, a participant who is described as an executive manager of a department can be assigned to a managerial role within the segment. The assignment can continue until all participants in a segment have been considered for assignment.

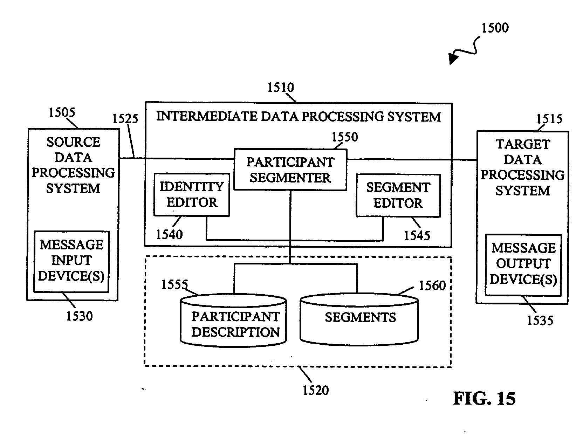

FIG. 15 shows an example data processing environment 1500 where participant segmentation can occur. Data processing environment 1500 includes a source system 1505, and intermediate data processing system 1510, a target system 1515, and a data storage system 1520. Systems 1505, 1510, 1515, 1520 are coupled to each other for data communication over a data link 1525.

Source system 1505 includes one or more message input devices 1530 for interaction with a user. Source system 1505 can be a cell phone, a keyboard, or a data processing device such as a computer or a handheld device. Message input device 1530 can be a keyboard, a pointing device, a microphone, a touchscreen, or other device suitable for receiving a message from a user.

Target system 1515 includes one or more message output devices 1535 for interaction with a user. Target system 1515 can be a cell phone, a display screen or data processing device such as a computer or a handheld device. Message output device 1535 can be a display screen, a speaker, or other device suitable for presenting a message from a user.

Intermediate data processing system 1510 can be a data processing device and/or software that performs processing activities in accordance with the logic of a set of machine-readable instructions. Among the processing activities performable by intermediate data processing system 1510 are an identity editor 1540, a segment editor 1545, and a participant segmenter 1550.

Data storage system 1520 can be one or more memory devices or servers that can store instructions and data for processing activities such as those performed at intermediate data processing system 1510. Among the data stored at data storage system 1520 are a collection of participant descriptions 1555 and a collection of segments 1560.

In operation, data processing environment 1500 can manage communications to identify segments of a group of participants in an enterprise. In one implementation, information descriptive of a particular participant in an enterprise can be received by intermediate data processing system 1510 performing identity editor activities 1540. The participant description can be received over message input device 1530 in source system 1505. The received participant description can include information that falls into one of the categories of common characteristics 205 shown in FIG. 2. Identity editor activities 1540 can include the use the received participant description to create or modify participant descriptions 1555 in data storage system 1520. For example, identity editor activities 1540 can include the modification of the value of an attribute in a field of an existing participant description such as a description table 300 of FIG. 3 using the received participant description.

In another implementation, information that can be used to identify a segment of one or more participants in an enterprise can be received by segment editor 1545 in intermediate data processing system 1510, for example, over message input device 1530 in source system 1505. The received segmentation information can include one or more domains, topics, borders, and roles that identify participants in an enterprise. The received segmentation information can also include information expressly identifying an individual participant such as the participant's name. Segment editor activities 1545 can include the use of the received participant identification to create or modify segments 1560 in data storage system 1520. For example, segment editor activities 1545 can include the registration of an identified participant in an existing segment or the definition of a new segment using the received participant identification.

In another implementation, a message can be received from a participant at source system 1505 over message input device 1530. The received message can implicitly or explicitly include information that can be used to identify a segment of recipients to whom the message is relevant. Source system 1505 can relay the message to intermediate data processing system 1510 over data link 1525.

In turn, intermediate data processing system 1510 can perform participant segmenter activities 1550 to manage the communication of the received message by identifying recipients for the message based on identification information implicitly or explicitly included with the message. For example, participant segmenter activities 1550 can include the dynamic identification of recipients for the message through a comparison of the identification information included with the message with participant descriptions 1555. Participant segmenter activities 1550 can also include the identification of one or more recipients for the message through the retrieval of a relevant segment from segments 1560.

Regardless of how a recipient for the message is identified, intermediate data processing system 1510 can relay the message to target system 1515 over data link 1525. Target system 1515 can in turn communicate the message to the identified participant using output device 1535.

Various implementations of the systems and techniques described here can be realized in digital electronic circuitry, integrated circuitry, specially designed ASICs (application specific integrated circuits), computer hardware, firmware, software, and/or combinations thereof. These various implementations can include one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) may include machine instructions for a programmable processor, and can be implemented in a high-level procedural and/or object-oriented programming language, and/or in assembly/machine language. As used herein, the term "machine-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing system that includes a back-end component (e.g., a data server), a middleware component (e.g., an application server), and a front-end component (e.g., a client computer having a graphical user interface or a Web browser through which a user can interact with an implementation of the systems and techniques described here), or any combination of such back-end, middleware, or front-end components. The components of the system can be interconnected by any form or medium of digital data communication (e.g., a communication network). Examples of communication networks include a local area network ("LAN"), a wide area network ("WAN"), a personal area network ("PAN"), a mobile communication network, and/or the Internet.

The computing system can include clients and servers. A client and server are generally remote from each other and typically interact through a communication network. The relationship of client and server arises by virtue of computer programs running on the respective computers and having a client-server relationship to each other.

Although only a few embodiments have been described in detail above, other modifications are possible. The logic flows depicted in the flowcharts do not require the particular order shown, or sequential order, to achieve desirable results. In certain implementations, multitasking and parallel processing may be preferable. Communication management can proceed using one or more of domains, topic specifications, borders, and roles.

Accordingly other implementations are within the scope of the following claims.

## Claims

1. A method comprising:
profiling participants in an enterprise according to characteristics of the participants, the characteristics associated with taxonomies according to the subject of the taxonomies;
receiving identification of a domain that is associated with a first of the taxonomies;
receiving identification of a specification identifying one or more of the characteristics associated with the first taxonomy; and
segmenting the profiled participants into a subgroup by matching the characteristics of the participants with the domain and the specification.

2. The method of claim 1, further comprising:
receiving identification of a border drawn from a second taxonomy; and
segmenting the subgroup by matching the characteristics of the participants with the intersection of the border with the domain and the specification.

3. The method of claim 1, further comprising querying a user for the identification of the domain and the identification of the specification.

4. The method of claim 1, further comprising:
adding information identifying the domain to a message; and
sending the message to the subgroup.

5. The method of claim 1, further comprising profiling the participants according to a finite vocabulary describing the characteristics.

6. The method of claim 1, wherein receiving identification of the domain comprises receiving identification of a corporate domain, the corporate domain common to corporate enterprises.

7. A method comprising:
receiving a characteristic identifying a first subgroup of selected participants in an enterprise, the characteristic hard-coded into a set of machine-readable instructions for segmenting communication recipients;
receiving a specification of the characteristic, the specification delineating a second subgroup of participants within the first subgroup, the specification added to the set of machine-readable instructions; and
managing communications with the second subgroup based upon the characteristic and the specification of the characteristic.

8. The article of claim 7, wherein receiving the specification of the characteristic comprises receiving the specification of the characteristic, the specification assigned to the characteristic to customize the set of machine-readable instructions to the enterprise.

9. The article of claim 7, wherein receiving the specification of the characteristic comprises receiving a specification particular to the characteristic.

10. The article of claim 7, wherein receiving the characteristic identifying the first subgroup comprises receiving a domain identifying the first subgroup based on the nature and type of the first subgroup's participation in the enterprise.

11. The article of claim 7, wherein receiving the characteristic identifying the first subgroup comprises receiving a selection from amongst a collection of potential characteristics.

12. The article of claim 7, further comprising presenting an inventory of specifications of the characteristic to a participant.

13. The article of claim 7, further comprising associating a plurality of participant characteristics with each of a plurality of participants in the enterprise, subgroups of the plurality of participants sharing common characteristics.

14. The article of claim 7, wherein associating the plurality of participant characteristics with each of the plurality of participants comprises associating a plurality of attribute values with each of the plurality of participants.

15. The article of claim 7, wherein managing communications comprises establishing a contact list of the participants in the second subgroup.

16. The article of claim 15, wherein establishing the contact list comprises dynamically establishing the contact list for a particular message.

17. The article of claim 7, further comprising receiving a border identifying a third subgroup of the second subgroup of selected participants, the border drawn from a second characteristic hard-coded into a set of machine-readable instructions.

18. The article of claim 17, identifying managed communications by one or more of the characteristic and the specification of the characteristic rather than the border.

19. The article of claim 7, further comprising:
receiving a role of a participant within the second subgroup; and
excluding the participant from communications within the second subgroup based on the role.

20. A method comprising:
receiving a message from a user;
receiving two or more characteristics identifying a subgroup of selected participants in an enterprise for receipt of the message; and
dynamically identifying the subgroup of participants for receipt of the received message.

21. The method of claim 20, wherein receiving the message from the user comprises receiving the message from the user by way of a source data processing system where the message originated.

22. The method of claim 20, wherein dynamically identifying the subgroup of participants comprises identifying the subgroup of participants for the received message upon receipt of the message.

23. The method of claim 20, wherein dynamically identifying the subgroup of participants comprises identifying the subgroup of participants periodically.

24. The method of claim 20, wherein dynamically identifying the subgroup of participants comprises discarding the identification of the subgroup of participants after communication of the message.

25. The method of claim 20, wherein receiving two or more characteristics comprises:
receiving a first characteristic identifying selected participants in the enterprise based on a location of participation in the enterprise; and
receiving a second characteristic identifying selected participants in the enterprise based on a nature of participation in the enterprise.

26. The method of claim 20, wherein receiving two or more characteristics comprises receiving a role of a participant within the subgroup.

27. The method of claim 26, wherein dynamically identifying the subgroup of participants for receipt of the received message comprises excluding the participant from the identified subgroup based on the role.

28. A machine-implemented method comprising:
receiving a description of a first participant's participation in an enterprise, the description including a characteristic and a location of the first participant's participation;
storing the description of the first participant's participation in a participant data object;
identifying that the first participant is a member of a group of recipients for a class of messages based upon the characteristic and the location of the first participant's participation;
associating the first participant with the group of recipients, associating the first participant including identifying a role of the first participant within the group of recipients;
receiving a message including information applicable to identifying the group of recipients; and
excluding the first participant from a communication of the received message to other members of the group of recipients based on the role of the first participant within the group of recipients.

29. An article comprising a machine-readable medium storing instructions operable to cause one or more machines to perform operations comprising:
receiving information regarding a segment of participants; and
registering a new member with the segment of participants as having a certain role in the segment, the new member sharing the common characteristic of the participants.

30. The article of claim 29, wherein registering the new member comprises indicating that the new member is to be excluded from certain communications to the segment of participants.

31. The article of claim 29, wherein receiving information regarding the segment of participants comprises:
receiving a generic domain common to many enterprises, the generic domain identifying a group larger than the segment of participants; and
receiving a topic specification of the generic domain, the topic specification delineating a second subgroup within the group identified by the generic domain.

32. The article of claim 31, wherein receiving the topic specification comprises receiving the topic specification delineating the segment of participants.

33. A device comprising:
a participant description database identifying participants and describing the participants' participation in an enterprise; and
a data processing system configured to perform processing activities, the activities including
receiving a characteristic identifying a first subgroup of selected participants in an enterprise, the characteristic hard-coded into a set of machine-readable instructions for segmenting communication recipients,
providing machine-readable instructions for presenting a collection of potential specifications of the characteristic to a user to further delineate the first subgroup into a second subgroup,
receiving a specification of the characteristic from the user, and comparing the characteristic and the specification of the characteristic with the participants' participation in the enterprise as found in the participant description database to identify the first subgroup and delineate the first subgroup into the second subgroup.

34. The device of claim 33, wherein the participant description database includes a participant object identifying a particular participant and describing the particular participant's participation in an enterprise.

35. The device of claim 34, wherein the participant object includes information describing a qualification of the particular participant.

36. The device of claim 33, wherein the data processing system is also configured to perform activities including receiving the specification that is particular to the characteristic.
